# EUROPEAN PATENT SPECIFICATION

(11) **EP 1 882 567 B1**
(45) Date of publication and mention of the grant of the patent: **04.09.2013**
(21) Application number: 07113277.3
(22) Date of filing: 26.07.2007
(51) Int. Cl.: B27B 5/16, B27B 5/26, B23D 45/04, B27G 19/02

(54) **Mitre saw with top table**
Gehrungssäge mit obenliegendem Tisch
Scie à onglets avec établi supérieur

(30) Priority: 29.07.2006 GB 0615150
(43) Date of publication of application: 30.01.2008
(73) Proprietor: Black & Decker, Inc., Newark, DE 19711 (US)
(72) Inventor: Spinelli, Pierluigi, 06126, Perugia (IT); Parks, James, Whitehall, MD 21161 (US)
(74) Representative: Bell, Ian Stephen

(56) References cited:
- EP-A2- 1 038 622
- DE-U1-202004 019 137
- FR-A1- 2 450 151
- JP-A- 2005 178 281

## Description

The present invention relates to a saw according to the preamble of claim 1. Such a saw is known from JP 2005-178281.

WO98/18588 discloses a sliding compound mitre saw. Such a saw can perform bevel cuts, mitre cuts, sliding cuts and chop cuts. The sliding compound mitre saw disclosed comprises a base 12 (using the same reference numbers as those used in WO98/18588) having a rotatable table 14 mounted within it. The rotatable table 14, in conjunction with a fence 26 fixed to the base 12, enables the sliding compound mitre saw to perform mitre cuts. Connected to the rear of the table 14 is a bevel mount 16 which is able to pivot about a horizontal axis in relation to the table 14. The pivotal movement of the bevel mount 16 in relation to the table 14 enables the sliding compound mitre saw to perform bevel cuts. Slideably mounted onto the bevel mount 16 are two guide rods 34 which are capable of sliding horizontally, backwards and forwards. The rods 34 enable the sliding compound mitre saw to perform sliding cuts. Pivotally mounted on the end of the guide rods 34 is a motor unit 36, which comprises a motor 22 for rotationally driving a circular saw blade 18 mounted on a drive spindle on the motor unit 36. The pivotal movement of the motor unit 36 in relation to the guide rods 34 enable the saw to perform chop cuts.

Rigidly mounted to the motor unit 36 is a fixed guard 40 which surrounds the cutting edge of the top half of the cutting blade 18. Pivotally mounted to the motor unit is a pivotal guard 42 which can pivot between a first position where it surrounds the cutting edge of the lower half of the cutting blade and a retracted position where the cutting edge of the lower half of the blade 18 is exposed for use in cutting.

The pivotal guard is pivoted between its two positions using a mechanical linkage which comprises a series of mechanical arms 48, 50, which are pivotally connected to each other and the saw, and cams 52, 54 which control the movement of the arms 48, 50. As the motor unit is pivoted downwards, the mechanical linkage causes the lower cutting edge of the blade to become exposed due to the retraction of the pivotal guard by the mechanical linkage.

JP2005-178281 describes a chop saw with a table mounted on top of the motor unit.

According to the invention, there is provided a saw in accordance with claim 1.

An embodiment of the present invention will now be described with reference to the accompanying drawings of which:
Figure 1 shows a computer generated drawing of the sliding compound mitre saw with a table from a first perspective;
Figure 2 shows a computer generated drawing of the sliding compound mitre saw with a table from a second perspective;
Figure 3 shows a computer generated picture of a side view of the saw showing the guard actuation mechanism and the mechanical linkage which automatically moves the pivotal guards;
Figure 4 shows a side view of the saw with the blade at its maximum height;
Figure 5 shows a side view of the saw with the blade touching a work piece;
Figure 6 shows a side view of the saw with the blade cutting the work piece;
Figure 7 shows a computer generated picture of the saw with a first embodiment of a table height adjustment mechanism;
Figure 8 shows computer generated picture of a top view of the saw showing the height adjustment mechanism (with the table 114 being shown as transparent);
Figure 9A and 9B are engineering drawings of the tubular support;
Figure 10 shows a sketch of the locking mechanism for a second embodiment of the height adjustment mechanism; and
Figure 11 shows a perspective view of an embodiment of the present invention comprising the safety lock feature for the motor unit pivot lock.

The embodiment of the invention described herein relates to a sliding compound mitre saw, similar to that described in WO98/18588, which has a table mounted on top of the motor unit to enable the saw to act as a table saw.

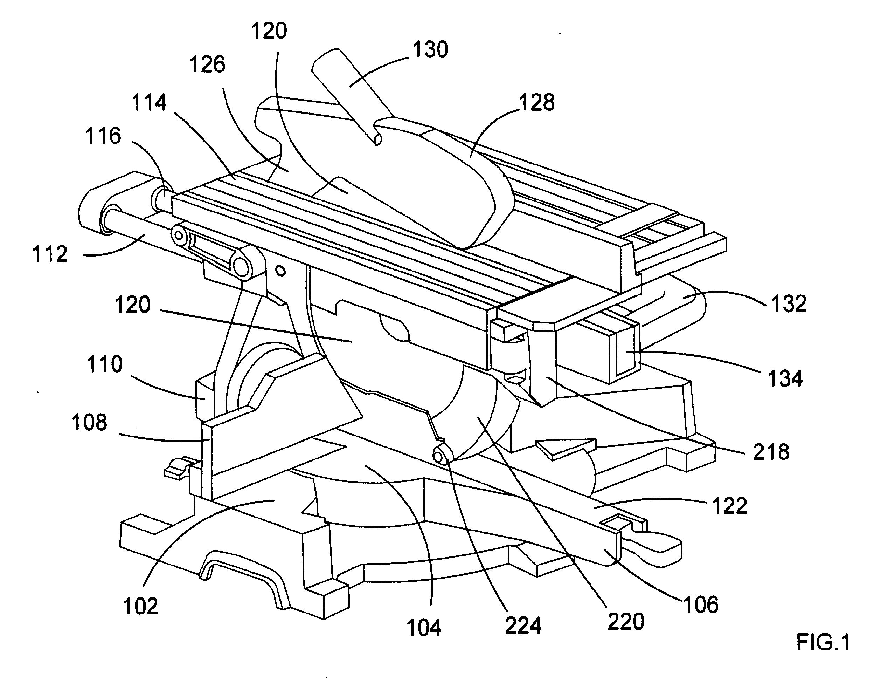

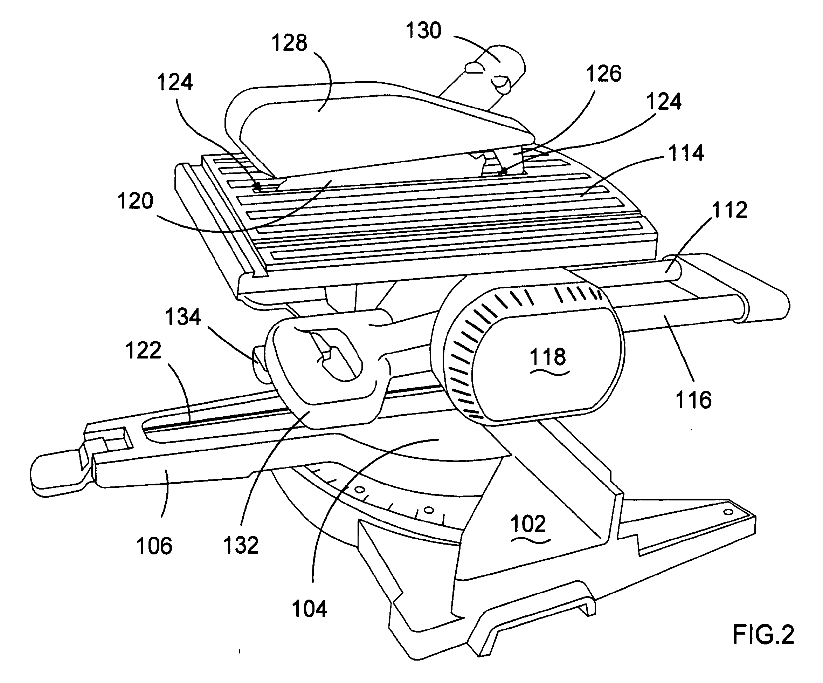

Referring to Figures 1 and 2, there is provided a sliding compound mitre saw with a table 114 which can perform cuts, mitre cuts, sliding cuts and chop cuts. The sliding compound mitre saw disclosed comprises a base having a rotatable table 104 mounted within it. An extension arm 106 is attached to the periphery of the rotatable table 104 and extends forward in well known manner. The rotatable table 104, in conjunction with a fence 108 fixed to the base 102, enables the sliding compound mitre saw to perform mitre cuts. Connected to the rear of the rotable table 104 is a bevel mount 110 which is able to pivot about a horizontal axis in relation to the rotatable table 104. The pivotal movement of the bevel mount 110 in relation to the rotatable table 14 enables the sliding compound mitre saw to perform bevel cuts. Slideably mounted onto the bevel mount 110 are two guide rods 112, 116 which are capable of sliding horizontally, back wards and forwards. The rods 112, 116 enable the sliding compound mitre saw to perform sliding cuts. Pivotally mounted on a motor support 208 which is rigidly attached to the ends of the guide rods 112, 116 is a motor unit 118, which comprises a motor (not shown) for rotationally driving a circular saw blade 120 mounted on a drive spindle on the motor unit 118. The pivotal movement of the motor unit 118 in relation to the guide rods 112, 116 enable the saw to perform chop cuts. The motor unit 118 is biased to an upward position by a spring (not shown). A slot 122 extends across the rotatable table 104 and along the extension arm 106.

Mounted on the top of the saw is a table 114 which enables the sliding compound mitre saw to be also used as a table saw. The table 114 is attached to the top side of the motor unit 118. A slot 124 is formed through the table 114 through which the top section of the circular saw blade 120 projects. The motor unit 118 can be locked in a downward position such that the table 114 is horizontal. A work piece such as a piece of wood can then be slid across the top of the table 114 to engage with the top section of the saw blade 120 thus enabling the sliding compound mitre saw to be used as a saw table. A riving knife 126 is located towards the rear of the saw blade 120 and a guard 128 can surround the top of the saw blade 120 when the saw is not being used as a table saw, which includes a shoot 130 for the extraction of wood chips.

The saw comprises a plurality of guards located below the table 114 which are capable of enclosing the lower section of the saw blade for safety purposes when the saw is not being used as a sliding compound mitre saw for performing chop, mitre, bevel or sliding cuts, for example when the saw is being used as a table saw, with the motor unit 118 locked downwardly.

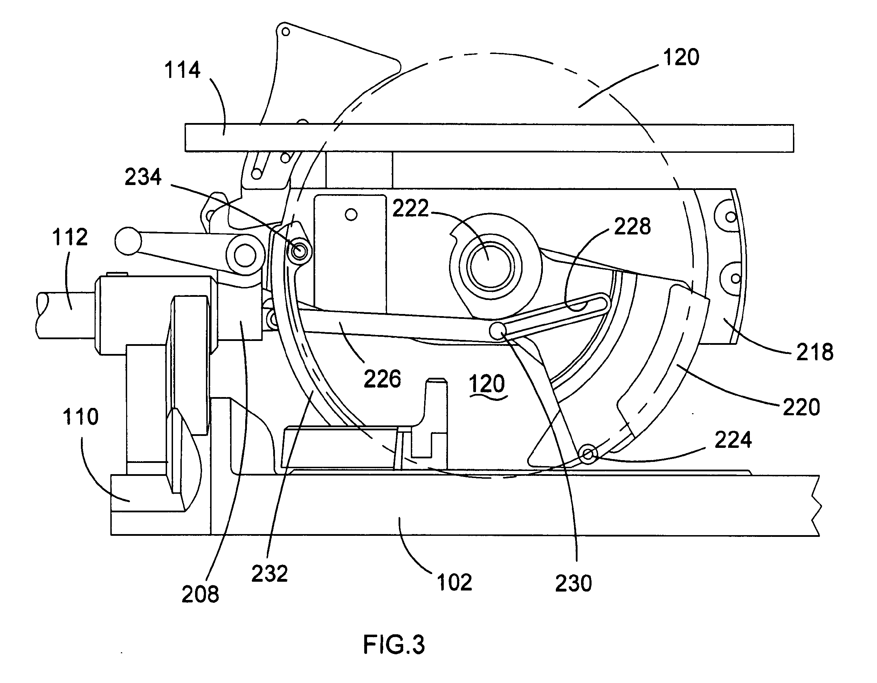

Referring to Figures 3 to 6, a handle 132 is attached to the motor unit 118 by which a user can grip and pivot the motor unit 118 and the circular saw blade 120 downwards towards the rotatable table 104. An electric switch 134 is mounted on the handle 132 for activating the motor.

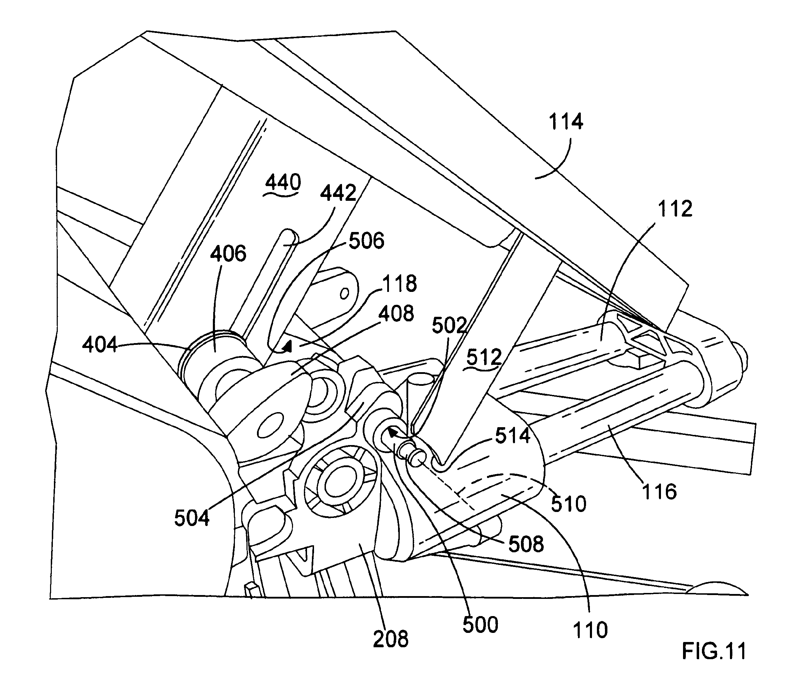

The motor unit 118 can be locked using a motor unit pivot locking mechanism in its lowest pivotal position (Figure 3) against the biasing force of a spring. The motor unit pivot locking mechanism will now be described with reference to Figure 11.

The motor unit pivot locking mechanism comprises a slideable locking rod 500 which is capable of being slid along its longitudinal axis 510 with a tubular aperture 502 formed through a part 504 of the motor support 208. One end (not shown) of the tubular aperture 502 faces a side wall 506 of the motor unit 118. A recess (not shown) is formed within the wall 506 which is capable of receiving the non visible end of the slideable locking rod 500 when it is aligned with the non visible end of the tubular aperture 502. The recess is located within the wall 506 of the motor unit in a position so that it is aligned with the non visible end of the tubular aperture 502 when the motor unit 118 is located in its lowest position. When the motor unit 118 is in its lowest position, the non visible end of the locking rod 500 is slid into the recess. The motor unit 118 is then locked in its lowest position against the biasing force of the spring and prevented from pivoting. In order to release the motor unit 118, the locking rod 500 is slid along its longitudinal axis, withdrawing the end from the recess, allowing the motor unit 118 to be pivoted. When the motor unit 118 is in any other position other than its lowest, the recess is not aligned with the tubular aperture 502 and therefore, the end of the locking rod 500 can not be slid into it. Thus the locking mechanism can not be operated. When the locking rod 500 is in the unlocked position so that the motor unit 118 can pivot, the exposed end 508 extends further away from the motor support 208 than when it is in the locked position. The exposed end 508 of the locking rod 500 comprises a finger grip region. A retention mechanism (not shown) prevents the locking rod 500 from being withdrawn completely from the motor support 208.

When the motor unit 118 is in the locked lower position, the table 114 is horizontal. In this position the table 114 can be used as a table saw, the work piece 216 being cut by the part of the saw blade 120 which passes through the slot 124.

When the motor unit 118 is free to pivot, the saw can be used as a sliding compound mitre saw in the normal manner.

The height of the table 114, and hence the amount of saw blade 120 passing through it, can be adjusted vertically. This is described in more detail further below.

The lower part of the circular saw blade 120 below the table 114 is surrounded by a guard actuation assembly. The guard actuation assembly which will now be described in more detail.

Attached to the motor unit 118 is a first fixed guard 218 which surrounds top and middle sections of the circular saw blade 120. A "fixed guard", such as the first fixed guard, is a blade guard which remains stationary relative to the motor unit 118.

Pivotally attached to the first fixed guard 218 is a second forward pivotal guard 220. The second forward pivotal guard 220 pivots about the axis 222 of the circular saw blade 120. A spring (not shown) biases the second forward pivotal guard 220 downward (clockwise) as shown in figure 3. A roller 224 is mounted on the base of the guard 220. The roller 224 engages either the rotary table 104 or extension 106 or a work piece 216 mounted on the support table 104 or extension 106.

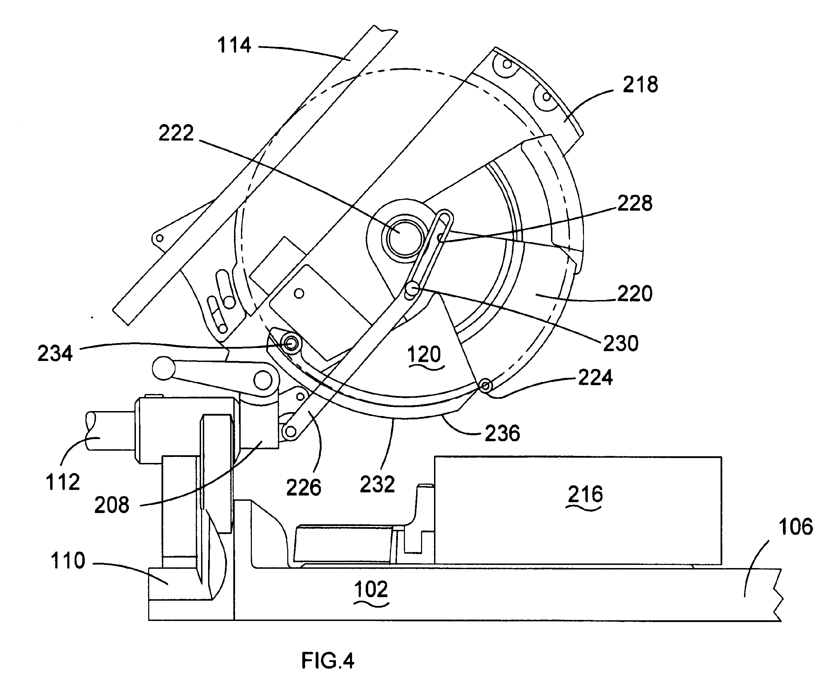

A bar 226 is pivotally attached at one end to the motor support 208 attached to the end of the guide rails 112, 116. An elongate slot 228 is formed along a section of the length of the bar 226 at the other end. A pin 230, rigidly attached to the second forward pivotal guard 220 passes through the slot 228, and is capable of sliding along said slot 228. The biasing spring acting on the second forward pivotal guard 220 causes the guard to pivot until the pin 230 is at the inner end position of the slot where it remains held by the force of the spring. The pin 230 located within the slot 28 of the bar 26 controls the pivotal movement of the second guard 220 on the housing as it pivots upwards and downwards. When the housing 10 is in its upper most pivotal position (Figure 4), the second forward pivotal guard 220 surrounds the lower front section of circular saw blade 120. As the motor unit 118 is pivoted downwardly, the bar 226 pushes the pin 230, causing the second forward pivotal guard 220 to telescopically pivot into the first fixed guard 218. The slot 228 allows the guard 220 to pivot freely, against the biasing force of the spring if it encounters a work piece 216 located on the support table 104.

A third rearward pivotal guard 232 is pivotally mounted about a point 234 on the rear of the first fixed guard 218.

A spring (not shown) biases the third rearward pivotal guard 232 backwards (clockwise) as shown in figure 3. A slot (not visible) is formed centrally along the length of the guard 232. When the motor unit 118 is pivoted to its uppermost position (Figure 4), the third rearward pivotal guard 232 pivots to a maximum rearward (clockwise) position where it surrounds the rear of the circular saw blade 120. When the motor unit 118 is pivoted downwardly, the front tip 236 of the third rearward pivotal guard 232 engages with either the support table 104 or a work piece 216 on the support table 104. Once the front tip 236 is engaged, pivotal downward movement causes the front tip 236 to slide forward, rotating the third rearward pivotal guard 232 about its axis 234 anti-clockwise, the edge of the cutting blade 120 passing through the slot in the third rearward pivotal guard 232 and allowing it to contact a work piece 16 to cut.

When the housing is raised to its upper pivot point (Figure 4), the front tip 236 of the third rearward pivotal guard 232 and the rear lower end of the second forward pivotal guard 220 meet so that the whole of the lower section of the cutting blade 120 is surrounded. This, in combination with the fixed guard 218, ensures the whole of the blade 120 surrounded when the motor unit 118 is in the upper position.

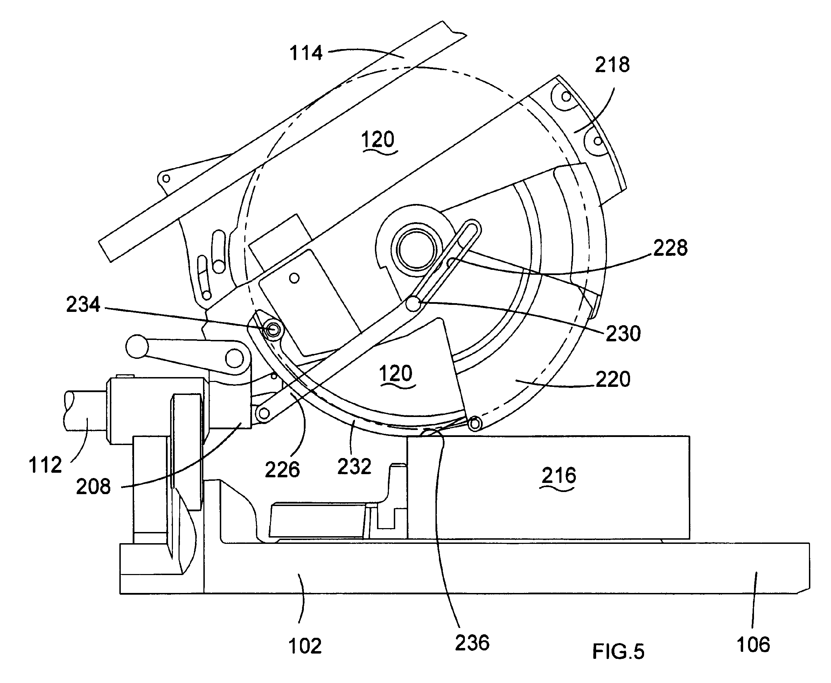

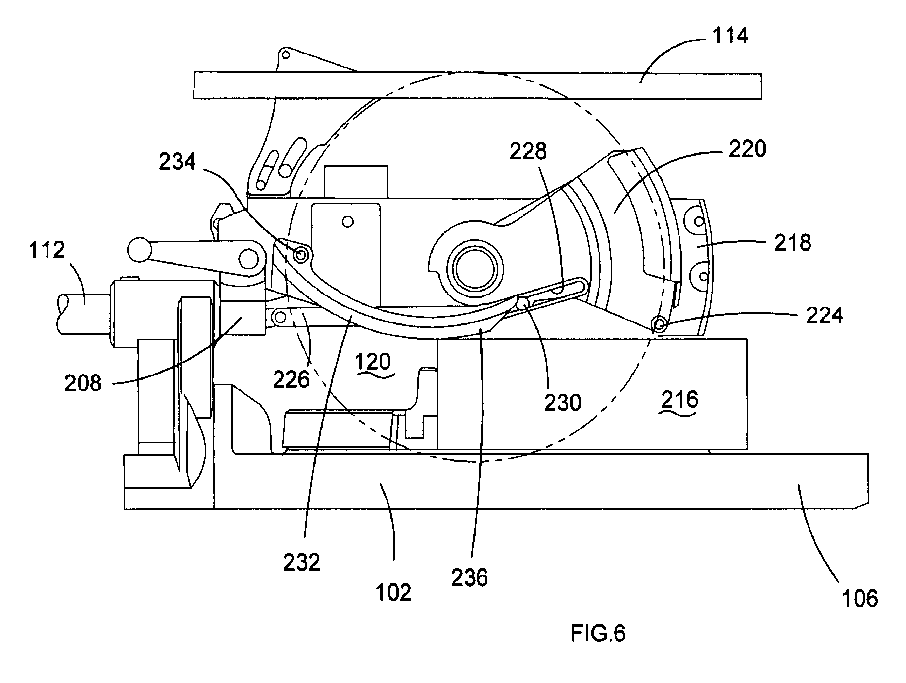

When the motor unit 118 is pivoted downwardly, the second forward pivotal guard 220 is moved anti-clockwise as shown in Figure 5, against the biasing force of the spring, by the pin 230 located in the inner end position of the elongate slot 228 of the bar 226. The second forward pivotal guard 220 pivots, as the motor unit 118 is pivotally lowered, under the control of the bar 226, until the roller 224 engages the work piece 116 (see Figure 6). As the motor unit 118 continues to pivot downwardly, the roller 224 rolls over the top surface of the work piece 216, causing the second forward pivotal guard 220 to pivot at a different rate which would otherwise be caused by the bar 226, resulting in the pin 230 sliding along the elongate slot 228 towards the end located remotely from the bar's pivot point. Thus the front lower section of the saw blade 120 becomes exposed to allow it to cut the work piece 216.

Similarly, the third rearward pivotal guard 232 pivots once the tip 236 has engaged, allowing the edge of the blade 120 to pass through the third rearward pivotal guard 232, thus exposing the rear lower section of the blade 120 to cut the work piece 216 (see Figure 6).

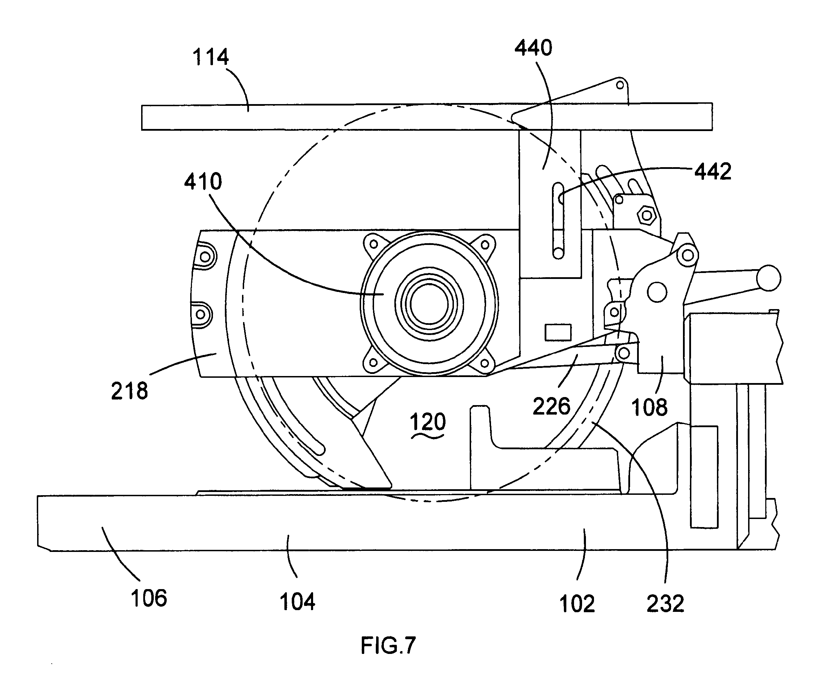

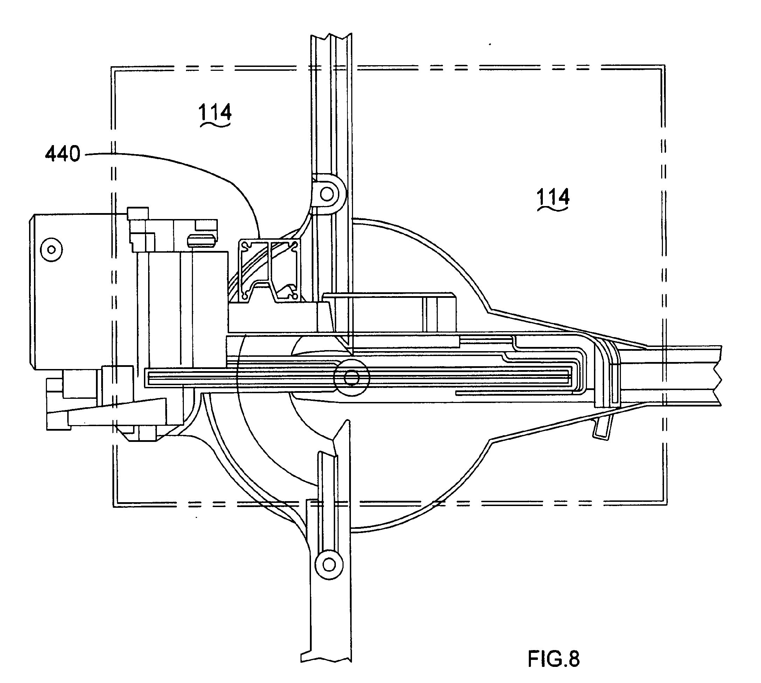

The first embodiment of height adjustment mechanism will now be described with reference to Figures 7, 8 and 9.

The table 114 is moveably mounted on the motor unit 118 using a tubular support 440. The tubular support 440 allows the table 114 to slide up and down on the motor unit 118.

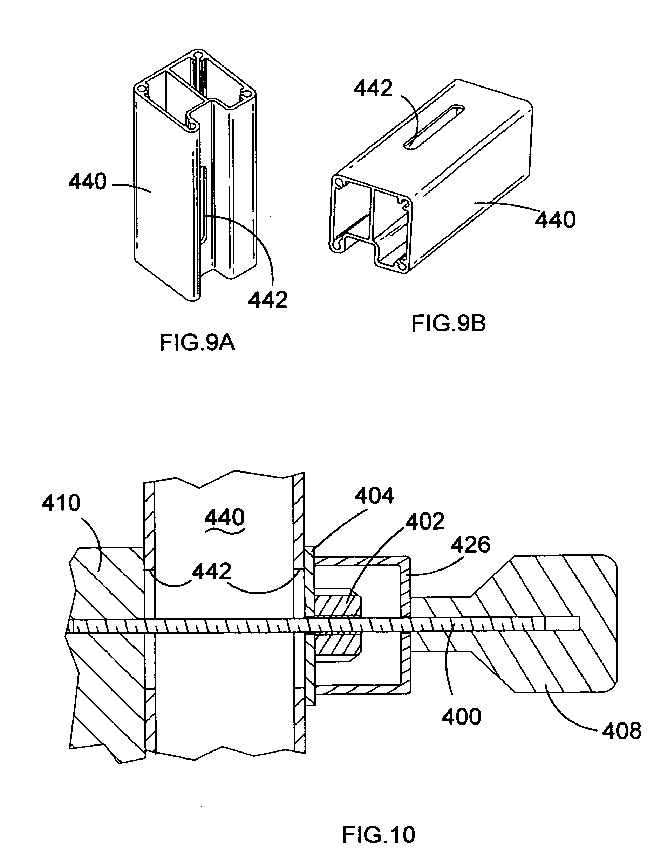

Referring to Figure 9, attached to the edge of the table 114 is a tubular support 440. The longitudinal axis of the support 440 is vertical. The shape of the cross section of tube 40 is rectangular as best seen in Figures 9A and 9B. Two vertical slots 442 (only one is visible in Figure 10) are formed on opposite sides of the tubular support 440 in a corresponding manner. A threaded hole is formed in the metal casting which forms the housing 410 of the motor unit 118. A bolt passes through the two slots 442, passing through the width of the tubular support 400 and is threadedly engaged in the hole in the casting of the housing 410. The head of the bolt was sufficiently large to prevent it passing through the slots 442.

When the bolt is screwed into the threaded hole, it sandwiches the tubular support 440 against the casting 9as the head of the bolt can not pass through the slots 442) and prevents it being able to slide in a vertical manner. In order to raise the height of the table 114 above the housing 410, the bolt is unscrewed slightly, so that the tubular support 440 can slide vertically, the sliding movement of the bolt along the elongate slot 442 controlling the movement of the tubular support 440. The height is then adjusted and then the bolt tightened to hold the tubular support 440, and hence table 114, stationary.

A second embodiment of the height adjustment mechanism is now described with reference to Figure 10. Where the same features are present in the second embodiment which were present in the first, the same reference numbers have been used.

The design remains substantially the same. However, the bolt has been replaced by a threaded bar 400 which screws into the metal cast of the housing 410 and a locking knob assembly (described below) which screws onto the threaded bar 400 to sandwich the tubular support 440 against the cast of the housing 410. The purpose is to prevent the vertical tubular support 440 from unnecessary movement during height adjustment.

At Figure 10 is to be found a sketch of a horizontal cross section of the threaded bar 400 and support 440.

The assembly comprises a self-locking nut 402 (with nylon insert) being screwed onto the threaded bar 100 which is screwed into the metal cast 410. The threaded bar 100 passes through vertical slots 442 in the vertical tubular support 440. The nut 402 is screwed onto the bar 400 sandwiching a washer 404 between the nut 402 and the vertical support 440. The nut 402 is tightened to apply a predetermined compression force onto the vertical support 440. This allows the support 440 limited movement. A cup shaped washer 406 surrounds, but does not engage with the nut 402 which abuts against the washer 404. A knob 408 is then screwed onto the threaded shaft 400 to sandwich the cup shaped washer 406 against the washer 404. Tightening of the knob 408 results in the vertical support 440 being against the side of the cast 410 to fix its position. The slackening of the knob 408 releases the support 440 and allows it to slide. However, the self-locking nut 402 prevents excessive movement of the support 440.

It is desirable to ensure that when the saw is being used to perform mitre, bevel or chop cuts on a work piece located on the rotatable table 104, maximum visibility is provided to the operated. In order to achieve this, the table ought to be raised to its maximum height whilst the saw is being used to perform such cuts. In order to ensure that the height of the table 114 is raised to its maximum above the rotatable table 104, a height safety adjustment mechanism has been incorporated.

Referring to Figure 11, the height safety adjustment mechanism comprises a rigid metal strip 512 which is rigidly attached to the table 114 and extends downwardly towards the motor unit pivot locking mechanism.

When the table 114 is at its highest position, the lower end 514 of the strip 512 locates above the exposed end 508 of the locking rod 500. As such, when the table 114 is at its maximum height, the operator can freely slide the locking rod 500 within the tubular aperture 502. Therefore, when the motor unit is in its lowest position, the locking rod can be slid to lock or unlock the motor unit 118 to prevent or allow pivotal movement respectively of the motor unit 118 on the motor support 208. If the height of the table is reduced when the motor unit 118 is pivotally locked in it lowest position, the exposed end 508 of the locking rod 500 being located in its closest position to the motor support 208, the lower end 514 of the metal strip 512 passes the exposed end 508, causing a part of the metal strip 512 to locate adjacent the exposed end 508 of the locking rod 500, As such, the strip 512 prevents the locking rod 500 from being slid within the aperture 502 to withdraw the end from the recess, as movement of the exposed end 508 is blocked by the strip 512. As such, when the table 114 is not in its highest position, the motor unit pivot locking mechanism can not be released and thus the motor unit 118 can not be pivoted relative to the motor support 208 moved whilst the table 114 is not in its highest position. In order to release the motor unit pivot locking mechanism, the table 114 must be raised to its maximum height, in order to stop the strip 512 from blocking the movement of the locking pin 500.

If the motor unit pivot locking mechanism has been released whilst the table 114 is at its maximum height, the exposed end 508 of the locking rod moves to its most furthest position away from the motor support 208. In this position, the exposed end 508 is located beneath the lower end 514 of the strip 512. Therefore, if the table 114 is lowered, the lower end 514 of the strip 512 will engage with the exposed end 508 of the locking rod 500 and will then be prevented from moving further. This happens regardless of the angular position of the table 114 relative to the motor support 208. As such, the table 114 can not be lowered when the motor unit pivot locking mechanism is released as the exposed end 508 of the locking rod 500 prevents the downward movement of the strip and hence the table 114. Therefore, in order to allow the height of the table 114 to be reduced, the motor unit pivot locking mechanism must be locked in order to move the exposed end 508 of the locking rod 500 out of the path of the strip.

As such, the table is always located at its maximum height when the motor unit 118 is capable of pivoting on the motor support 208.

## Claims

1. A saw comprising:
a base assembly (102, 104) comprising a mounting portion (110);
a motor unit (118) which is pivotally mounted on the mounting portion (110) to allow the motor unit (118) to pivot towards or away from the base assembly (2, 4) to perform chop cuts;
the motor unit (118) having an output drive spindle (289) upon which a circular saw blade (120) can be rigidly mounted to be rotationally driven by the motor unit (118);
a pivotal locking mechanism which is capable of locking the motor unit (118) in its lowest pivotal position, the pivotal locking mechanism comprising a locking pin (500) slideably mounted in the mounting portion (110) which is capable of sliding between two positions when the motor (118) unit is in its lowest position, a first position where it engages with the motor unit (118) to lock it in its lowest position and a second position where it is disengaged from the motor unit (118) allowing it to freely pivot.
a table (114) mounted on the motor unit (118) to enable the saw to act as a table saw,
a table height adjustment mechanism which is capable of adjusting the height of the table (114) above the motor unit (118);.
**characterised in that** the table (114) comprises a strip (512); wherein the pivotal locking mechanism and table (114) interact with each other by the strip (512) engaging with the locking pin (500) when it is in its second position and the table (114) is lowered from its highest position, to stop further height reduction of the table (114), but which bi-passes the locking pin (500) when it is in its first position and the table (114) is lowered from its highest position, to allow further height reduction to ensure that the table (114) is in its highest position when the motor unit (118) is not locked in its lowest position.

2. A saw as claimed in claim 1 wherein, when the motor unit is locked in its lowest position, the pivotal locking mechanism is prevented from releasing the motor unit (118) to allow it to pivot, when the table (114) is not located at its highest position by the strip (512) blocking movement of the locking pin (500) when the locking pin (500) is in its first position and the strip has bi-passed the locking pin (500).

3. A saw as claimed in claims 1 or 2 wherein, when the locking pin (500) is in its first position and the strip has bi-passed the locking pin (500), the locking pin (500) is prevented from moving to its second position by the strip (512) until the table (114) has been moved to its highest position to move the strip (512) into a non blocking position.

4. A saw as claimed in any one of the previous claims wherein the mounting portion (110) comprises a motor support (208) which is slidingly connected to the rest of the mounting support to allow the motor unit (118) to slide across the base assembly (2, 4) to perform sliding cuts.

5. A saw as claimed in anyone of the previous claims wherein the movement of the table (114) towards or away from the motor unit (118) is linear.

6. A saw as claimed in anyone of the previous claims wherein the table (114) is rigidly mounted on at least one support rod (440) which is slidingly mounted onto the motor unit (118).

7. A saw as claimed in claim 6 wherein the support rod is a tubular support (440).

8. A saw as claimed in claim 7 wherein the tubular support (440) is locked to the motor unit (118) using a locking assembly which, in a locked position, prevents any movement of the support rod (440) and in an unlocked position, allows the support rod (440) to slide in a direction substantially parallel to its longitudinal axis but prevents any substantial movement of the support rod (440) in any other direction.

## Patentansprüche

1. Eine Säge, umfassend:
eine Basisanordnung (102, 104), die einen Befestigungsabschnitt (110) umfasst;
eine Motoreinheit (118), die schwenkbar an dem Befestigungsabschnitt (110) befestigt ist, um es der Motoreinheit (118) zu ermöglichen, zu der Basisanordnung (2, 4) hin oder von ihr weg zu schwenken, um Kappschnitte durchzuführen;
wobei die Motoreinheit (118) eine Ausgangsantriebsspindel (289) aufweist, auf welcher ein Kreissägeblatt (120) fest angebracht werden kann, um durch die Motoreinheit (118) drehangetrieben zu werden;
eine Schwenkverriegelungsvorrichtung, welche dazu fähig ist, die Motoreinheit (118) in ihrer niedrigsten schwenkbaren Position festzustellen, wobei die Schwenkverriegelungsvorrichtung einen Sicherungsstift (500) umfasst, der verschiebbar in dem Befestigungsabschnitt (110) befestigt ist, welcher dazu fähig ist zwischen zwei Positionen zu gleiten, wenn die Motoreinheit (118) in ihrer niedrigsten Position ist, eine erste Position wo er mit der Motoreinheit (118) einrastet, um sie in ihrer niedrigsten Position festzustellen und eine zweite Position, wo er von der Motoreinheit (118) gelöst ist, um ihr ein freies Schwenken zu ermöglichen.
ein Tisch (114), befestigt auf der Motoreinheit (118), um es der Säge zu ermöglichen als eine Tischsäge zu fungieren,
eine Tischhöheeinstellvorrichtung, welche dazu fähig ist, die Höhe des Tisches (114) über der Motoreinheit (118) einzustellen;.
**dadurch gekennzeichnet, dass** der Tisch (114) eine Leiste (512) umfasst; wobei die Schwenkverriegelungsvorrichtung und der Tisch (114) miteinander in Wechselwirkung durch die Leiste (512) stehen, die mit dem Sicherungsstift (500) einrasten, wenn er in seiner zweiten Position ist und der Tisch (114) von seiner höchsten Position abgesenkt wird, um weitere Höhenreduzierung des Tisches (114) zu stoppen, jedoch an dem Sicherungsstift (500) vorbeigeht, wenn er in seiner ersten Position ist und der Tisch (114) von seiner höchsten Position abgesenkt wird, um weitere Höhenreduzierung zu ermöglichen, um zu gewährleisten, dass der Tisch (114) in seiner höchsten Position ist, wenn die Motoreinheit (118) nicht in ihrer niedrigsten Position festgestellt ist.

2. Eine Säge wie in Anspruch 1 beansprucht, wobei, wenn die Motoreinheit in ihrer niedrigsten Position festgestellt ist, die Schwenkverriegelungsvorrichtung am Entriegeln der Motoreinheit (118), um Schwenken zu ermöglichen, abgehalten wird, wenn der Tisch (114) sich nicht in seiner höchsten Position, durch die Feststellbewegung der Leiste (512) des Sicherungsstifts (500), befindet, wenn der Sicherungsstift (500) in seiner ersten Position ist und die Leiste an dem Sicherungsstift vorbeigegangen ist.

3. Eine Säge wie in Anspruch 1 oder 2 beansprucht, wobei, wenn der Sicherungsstift (500) in seiner ersten Position ist und die Leiste an dem Sicherungsstift (500) vorbeigegangen ist, der Sicherungsstift (500) durch die Leiste (512) am Bewegen in seine zweite Position gehindert wird, bis der Tisch (114) an seine höchste Position bewegt wurde, um die Leiste (512) in eine nicht festgestellte Position zu bringen.

4. Eine Säge wie in einem der vorherigen Ansprüche beansprucht, wobei der Befestigungsabschnitt (110) einen Motorträger (208) umfasst, welcher verschiebbar an der Auflage des Befestigungsträgers befestigt ist, um es der Motoreinheit (118) zu ermöglichen über die Basisanordnung (2, 4) zu gleiten, um Gleitschnitte durchzuführen.

5. Eine Säge wie in einem der vorherigen Ansprüche beansprucht, wobei die Bewegung des Tisches (114) hin zur oder weg von der Motoreinheit (118) geradlinig ist.

6. Eine Säge wie in einem der vorherigen Ansprüche beansprucht, wobei der Tisch (114) auf mindestens einer Haltestange (440) fest angebracht ist, welche verschiebbar auf der Motoreinheit (118) befestigt ist.

7. Eine Säge wie in Anspruch 6 beansprucht, wobei die Haltestange ein Stützrohr (440) ist.

8. Eine Säge wie in Anspruch 7 beansprucht, wobei das Stützrohr (440) zur Motoreinheit (118) unter Verwenden einer Sperranordnung gesichert ist, welche, in einer gesperrten Position, jede Bewegung des Haltestange (440) verhindert und in einer ungesperrten Position der Haltestange (440) erlaubt, in eine im Wesentlichen parallele Richtung zu ihrer Längsachse zu gleiten, jedoch im Wesentlichen jede Bewegung der Haltestange (440) in jede andere Richtung verhindert.

## Revendications

1. Scie comprenant :
un ensemble de base (102, 104) comprenant une portion de montage (110) ;
une unité motrice (118) qui est montée à pivotement sur la portion de montage (110) pour permettre à l'unité motrice (118) de pivoter vers l'ensemble de base (2, 4) pour effectuer des tranchages ou s'en écarter ;
l'unité motrice (118) ayant une broche d'entraînement de sortie (289) sur laquelle une lame de scie circulaire (120) peut être montée de manière rigide afin d'être entraînée en rotation par l'unité motrice (118) ;
un mécanisme de verrouillage de pivotement qui est à même de verrouiller l'unité motrice (118) dans sa position de pivotement la plus basse, le mécanisme de verrouillage de pivotement comprenant une goupille de verrouillage (500) montée à coulissement dans la portion de montage (110), qui est à même de coulisser entre deux positions lorsque l'unité motrice (118) se trouve dans sa position la plus basse, une première position où elle s'engage sur l'unité motrice (118) pour la verrouiller dans sa position la plus basse et une seconde position où elle est dégagée de l'unité motrice (118) pour lui permettre de pivoter librement ;
un établi (114) monté sur l'unité motrice (118) pour permettre à la scie d'agir comme scie d'établi,
un mécanisme de réglage de hauteur d'établi qui est à même d'ajuster la hauteur de l'établi (114) au-dessus de l'unité motrice (118) ;
**caractérisée en ce que** l'établi (114) comprend une bande (512) ; dans laquelle le mécanisme de verrouillage de pivotement et l'établi (114) interagissent mutuellement sous l'effet de la bande (512) qui s'engage sur la goupille de verrouillage (500) lorsqu'elle se trouve dans sa seconde position et que l'établi (114) est abaissé de sa position la plus élevée, pour arrêter toute autre réduction en hauteur de l'établi (114), mais qui contourne la goupille de verrouillage (500) lorsqu'elle est dans sa première position et que l'établi (114) est abaissé de sa position la plus élevée, pour permettre une autre réduction en hauteur afin de s'assurer que l'établi (114) est dans sa position la plus élevée lorsque l'unité motrice (118) n'est pas verrouillée dans sa position la plus basse.

2. Scie selon la revendication 1, dans laquelle, lorsque l'unité motrice est verrouillée dans sa position la plus basse, le mécanisme de verrouillage de pivotement ne peut libérer l'unité motrice (118) pour lui permettre de pivoter lorsque l'établi (114) n'est pas situé dans sa position la plus élevée par la bande (512) bloquant le mouvement de la goupille de verrouillage (500) lorsque la goupille de verrouillage (500) est dans sa première position et que la bande a contourné la goupille de verrouillage (500).

3. Scie selon la revendication 1 ou la revendication 2, dans laquelle, lorsque la goupille de verrouillage (500) se trouve dans sa première position et que la bande a contourné la goupille de verrouillage (500), la goupille de verrouillage (500) ne peut se déplacer dans sa seconde position sous l'effet de la bande (512) jusqu'à ce que l'établi (114) ait été déplacé dans sa position la plus élevée pour déplacer la bande (512) en position de non-blocage.

4. Scie selon l'une quelconque des revendications précédentes, dans laquelle la portion de montage (110) comprend un support de moteur (208) qui est raccordé à coulissement au restant du support de montage pour permettre à l'unité motrice (118) de coulisser en travers de l'ensemble de base (2, 4) afin d'effectuer des découpes par coulissement.

5. Scie selon l'une quelconque des revendications précédentes, dans laquelle le mouvement de l'établi (114) vers l'unité motrice (118) ou en sens inverse est linéaire.

6. Scie selon l'une quelconque des revendications précédentes, dans laquelle l'établi (114) est monté de manière rigide sur au moins une tige de support (440) qui est montée à coulissement sur l'unité motrice (118).

7. Scie selon la revendication 6, dans laquelle la tige de support est un support tubulaire (440).

8. Scie selon la revendication 7, dans laquelle le support tubulaire (440) est verrouillé sur l'unité motrice (118) en utilisant un ensemble de verrouillage qui, en position verrouillée, empêche tout déplacement de la tige de support (440) et, en position non verrouillée, permet à la tige de support (440) de coulisser dans une direction sensiblement parallèle à son axe longitudinal, mais empêche tout mouvement sensible de la tige de support (440) dans n'importe quelle autre direction.
